# EUROPEAN PATENT SPECIFICATION

(11) **EP 2 242 375 B1**
(45) Date of publication and mention of the grant of the patent: **18.05.2016**
(21) Application number: 09702993.8
(22) Date of filing: 16.01.2009
(51) Int. Cl.: A23D 7/005, A23D 7/02, A23L 5/00, A23L 33/17, A23L 3/46

(54) **SPRAY-DRIED EMULSION**
SPRÜHGETROCKNETE EMULSION
ÉMULSION PRÉPARÉE PAR SÉCHAGE PAR ATOMISATION

(30) Priority: 18.01.2008 EP 08100639
(43) Date of publication of application: 27.10.2010
(73) Proprietor: DSM IP Assets B.V., 6411 TE Heerlen (NL)
(72) Inventor: VERKOEIJEN, Daniel, NL-2497 AW Den Haag (NL); ZAMOLO, Richard, NL-2613 RK Delft (NL); SEIN, Arjen, NL-2316 AA Leiden (NL); SMOLDERS, Gerardus Johannes Franciscus, NL-2612 EK Delft (NL)
(74) Representative: Best, Michael
(86) International application number: PCT/EP2009/050505
(87) International publication number: WO 2009/090249

(56) References cited:
- WO-A-00/11973
- WO-A-94/08468
- WO-A-2006/093459
- GB-A- 1 398 355
- US-A- 5 688 528
- US-A1- 2003 215 473
- US-A1- 2004 076 731
- US-B1- 6 517 883

## Description

### Field of the invention

The present invention relates to an edible dried formulation of an emulsion in the form of a spray-dried particulate composition. The invention also relates to a method for the preparation of the composition and to uses of the composition.

### Background of the invention

Oil-in-water emulsions for human consumption are widely used in the foodstuff industry. Due to their heterogeneous nature all emulsions are basically unstable. A frequent problem with such emulsions is physical storage stability, another is microbial degradation. The often high content of water of such emulsions is also problematic from a transport perspective by adding substantial weight to the respective product, thereby increasing transport and storage costs. Therefore, oil-in-water emulsions are often prepared a short time before use rather than being stored for an extended period of time.

WO 00/11973 discloses a spray-dried emulsified topping base, comprising a fat component, an emulsifier component and a soluble wheat protein.

WO 2006/093459 discloses a foodstuff particulate lipid composition comprising a solid non-lipid carrier and an oil-in-water emulsion. Whey protein is exemplified as carrier.

There is a need therefore for a dry formulation of such oil-in-water emulsions which is stable and which may easily be handled by the foodstuff industry and by domestic consumers.

The properties of oil-in-water emulsions are dependent on composition and structure. Accordingly, it is desirable that a dry formulation of an oil-in-water emulsion may be redispersed in an aqueous medium such that an oil-in-water emulsion is reconstituted. It is also desirable that the resulting oil-in-water emulsion has a composition and structure similar to that of the oil-in-water emulsion used to prepare the dry formulation.

### Summary of the invention

A method has now been identified which allows an oil-in-water emulsion to be dried to give a free-flowing particulate composition which is easy and convient to handle. This process may, in particular, be applied to oil-in-water emulsions where the emulsifier comprises galactolipid material.

Moreover, the dried composition may be readily redispersed in an aqueous medium so as to reconstitute an oil-in-water emulsion. An aqueous medium can for example be water, milk, juice, or saliva. Critically, such reconstituted emulsions have a similar particle size distribution as that of the original oil-in-water emulsion. The inventors of the current invention have realised that for the desired effect that must be obtained by the use of a spray-dried oil-in-water emulsion, the particle size distribution (before spray drying and after redispersion) is important.

Accordingly, nutritional claims made in relation to the oil-in-water emulsion may also be made in respect of emulsions which are reconstituted from the dry compositions of the invention.

The invention provides a method for obtaining a spray-dried oil-in-water emulsion which after redispersion in an aqueous medium has at least 75% by volume of the redispersed oil droplets in a particle size which is smaller or equal to the maximum particle size of the original oil-in-water emulsion and wherein at least 95% of the particles of the oil-in-water emulsion before spray drying have a particle size of < 1 µm, said method comprising the steps of providing an oil-in-water emulsion, adding a non-lipid carrier to said oil-in-water emulsion and obtaining an oil-in-water/carrier mixture, homogenizing the obtained oil-in-water/carrier mixture and spray drying the obtained homogenized oil-in-water/carrier mixture, wherein the non-lipid carrier comprises a starch hydrolysate of mono, di, and higher saccharides.

According to the invention, there is thus provided an edible spray-dried comprising a particulate solid non-lipid carrier and an oil phase, wherein
said oil phase being capable of being released from the carrier on contact with an aqueous medium to form an oil-in-water emulsion; and
(i) the oil droplets in said oil-in-water emulsion have a D[4,3] of from 100nm to 1000 nm;
(ii) at least 75% of the oil droplets in said (reconstituted) oil-in-water emulsion have a size of less than 1 µm; and
   wherein the non-lipid carrier comprises a starch hydrolysate of mono, di, and higher saccharides.

The invention also provides an edible spray-dried particulate composition comprising a particulate solid non-lipid carrier and an oil phase, wherein said oil phase is capable of being released from the carrier on contact with an aqueous medium to form an oil-in-water emulsion; and
the oil phase comprises a non-polar lipid and galactolipid material.
The invention further provides:
- a method for the preparation of an edible spray-dried particulate composition, which method comprises:
   (a) providing an oil-in-water emulsion;
   (b) providing a solid or liquid non-lipid carrier;
   (c) adding the carrier to the oil-in-water emulsion; and
   (d) spray-drying the resulting mixture,
      thereby to prepare an edible spray-dried particulate composition, and wherein the non-lipid carrier comprises a starch hydrolysate of mono, di, and higher saccharides;
- a method for the preparation of an edible spray-dried particulate composition, which method comprises:
   (a) providing an oil-in-water emulsion which comprises a non-polar lipid and galactolipid material;
   (b) providing a solid or liquid non-lipid carrier;
   (c) mixing the carrier and the oil-in-water emulsion; and
   (d) spray-drying the resulting mixture,
      thereby to prepare an edible spray-dried particulate composition and wherein the non-lipid carrier comprises a starch hydrolysate of mono, di, and higher saccharides;
- an edible spray-dried particulate composition obtainable by a method of the invention;
- a non-therapeutic use of a food product or food supplement prepared using a composition according to the invention for satiety;.

### Brief description of the drawings

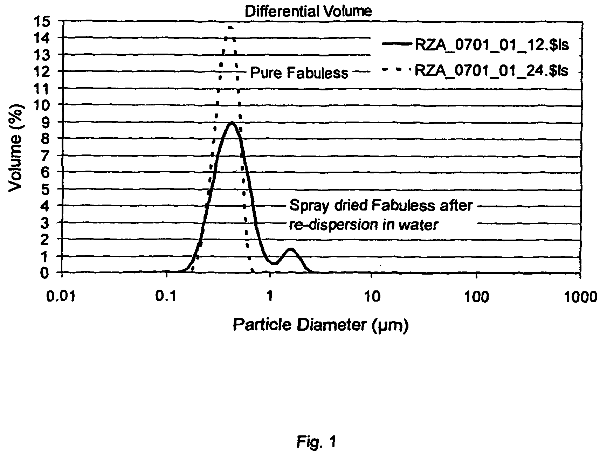

Fig. 1 shows the particle size distribution diagrams (charts, graphs) of an original Fabuless emulsion and a spray-dried Fabuless emulsion after re-dispersion in water.

### Detailed description of the invention

The invention provides a method for obtaining a spray-dried oil-in-water emulsion which, after redispersion in an aqueous medium, has at least 75% by volume of the redispersed oil droplets in a particle size which is smaller or equal to the maximum particle size of the original oil-in-water emulsion and wherein at least 95% by volume of the particles of the oil-in-water emulsion before spray drying have a particle size of < 1 µm, said method comprising the steps of providing an oil-in-water emulsion, adding a non-lipid carrier to said oil-in-water emulsion and obtaining an oil-in-water/carrier mixture, homogenizing the obtained oil-in-water/carrier mixture and spray drying the obtained homogenized oil-in-water/carrier mixture and wherein the non-lipid carrier comprises a starch hydrolysate of mono, di, and higher saccharides.

Particle size distribution is a relevant characteristic for this invention. Particle size distribution (PSD) can be measured by many methods, and each method leads to a typical expression for the particle size distribution. Numerous publications describing how to determine a particle size distribution exist, see for instance Introduction to Particle Technology by M. Rhodes [John Wiley and Sons, New York, 1998; chapter 3], or in Perry's Chemical Engineers' Handbook by R. H. Perry and D. W. Green [7th Ed., McGraw-Hill, New York, 1997; chapter 20].

For this invention use has been made of a forward light scattering method to determine the particle size distribution. This method generally leads to a *Volume Weighted Mean Particle Diameter* expressed as D[4,3], and to the values d10, d50, and d90 by volume, representing the value in the cumulative particle size distribution where 10%, 50%, and 90% of the volume of particles falls below. The value of d50 by volume is also called the *Volume Weighted Median Particle Diameter.*

One non limiting example of a PSD determination is described in example 5.

Upon comparing the particle size distribution of the original oil-in-water emulsion (i.e. the oil-in-water emulsion before spray-drying) with the particle size distribution in a dispersion obtained after redispersing the spray-dried oil-in-water emulsion in an aqueous medium, at least 75% by volume of the oil droplets of the redispersed oil-in-water emulsion have a particle size which is smaller or equal to the maximum particle size of the original oil- in-water emulsion. More preferred the mentioned percentage is at least 80 or 85%. Even more preferred are 90, 91, 92, 93, 94 and 95%. Most preferred are 96, 97, 98 and 99%. All percentages are by volume.

As a non-limiting example, the following explanation is provided. An obtained or provided (original, i.e. before spray-drying) oil-in-water emulsion has a particle size distribution between 0.1 and 1µm (for example determined by a forward light scattering method). The maximum particle size in this example is 1µm. After combining the emulsion with the non-lipidic carrier, spray-drying and redispersion in an aqueous medium the particle size distribution of the redispersed oil droplets is determined. At least 75% of the redispersed oil droplet must have a size smaller or equal to 1µm, the maximum particle size of the original dispersion. Even more preferred at least 75% of the redispersed oil droplet must have a size between 0.1 and 1µm. The other, remaining oil droplets may have a size smaller than 0.1 µm or larger than 1 µm. Typically, the remainder of droplets will have a larger, in this example larger than 1 µm, size. According to the method of the invention, the majority of the reconstituted oil droplets will again be in a size range which was found for the original oil-in-water emulsion.

The remainder of the droplets (which are not in line with the size requirement) typically has experienced spray-drying damage and as a result has coalesced to form larger particles. The extent of spray-drying damage can for example be controlled by gently mixing the carrier into the oil-in-water emulsion.

When highly concentrated oil-in-water emulsions are used it is advised to dilute the oil-in-water emulsion. The skilled person is well capable of determining a desired dilution factor for the oil-in-water emulsion. Hence, in a preferred embodiment, the amount of fat in the oil-in-water emulsion is, before spray-drying, adjusted to a suitable amount.

The inventors of the current invention have established that commercially available Fabuless™ oil-in-water emulsions are preferably diluted, before spray drying, to a concentration in the range from 11 to 15 wt% fat. More preferred is a concentration from 12 to 14 wt% fat and most preferred is a concentration of approximately 13% fat.

Alternatively worded, the shift in particle size distribution in a redispersed (spray-dried) oil-in-water emulsion compared to an original (i.e. before spray drying) is at most 25% (based on volume). More preferred the shift is less than 20, 15 or 10%. Even more preferred, the shift is less than 9, 8, 7, 6 or 5%. In a most preferred embodiment, the shift in particle size distribution is less than 4, 3, 2 or 1%.

In the method according to the invention at least 95% of the particles of the oil-in-water emulsion, before spray drying, have a particle size of < 1µm. In a preferred embodiment, at least 96, 97, 98, 99 or 100% of the particles have the mentioned particle size.

A method according to the invention can start with an already prepared (for example commercially available) oil-in-water emulsion (as long as it fulfils the requirement that at least 95% of the particles must have a particle size of < 1µm) or a method according to the invention can start by preparing an oil-in-water emulsion. An oil-in-water emulsion is typically prepared by mixing the separate components (which will be discussed in more detail later on) and by subjecting the obtained mixture to homogenisation such as a high-pressure homogenization method comprising at least 3 times a homogenisation at 500-700 Bar. The amount and intensity of the homogenisation steps can vary up to 6 times at 400-700 Bar, for example 6 times at 600 Bar. Higher pressures can equally well be applied.

After gently mixing the oil-in-water emulsion with the carrier, this obtained mixture is subjected to homogenization which typically involves one homogenization step at 150-250 Bar. Higher values (for example 500 Bar) can be used as well but do typically not provide any advantage. Alternatively worded a method according to the invention comprises at least one homogenization at a common pressure for high pressure homogenisers such as 150-250 Bar if the oil-in-water emulsion is already available.

If the oil-in-water emulsion needs to be prepared from raw materials (which will be specified in more detail later on) a method according to the invention can comprise two separate homogenization operations. The first one (i.e. for preparing the oil-in-water emulsion) is performed by several passes at relative high pressure (such as 400-1000 Bar, for example 600 Bar) and the second operation (i.e. for obtaining a homogeneous mixture of the oil-in-water emulsion and the carrier) at a relative low pressure (such as 100-500 Bar, but more typically at 150-250 Bar).

The present invention further concerns an edible spray-dried particulate composition which comprises an oil phase and the solid non-lipid carrier.

The composition of the invention is edible in the sense that it is suitable for animal consumption, for example by a human. Accordingly, all of the components of a composition of the invention will be fit for animal consumption or present in amounts which are considered fit for animal consumption.

The composition of the invention is a spray-dried composition. This indicates that the composition is one which is obtained or obtainable by spray-drying. That is to say, the composition is typically a particulate composition in which the oil phase is encapsulated in the particular solid non-lipid carrier. The oil phase is typically homogeneously distributed as droplets throughout the carrier and the carrier is typically present as a continuous, glassy substance between and/or around the oil droplets. As a consequence the oil phase in the spray-dried composition is hardly exposed to the surroundings or environment, such as oxygen, and as a result the oil phase is very stable and hardly subjected to oxidation.

The composition comprises an oil phase and the carrier. The oil phase is derived from an oil-in-water emulsion. That is to say, the composition of the invention is obtained by spray-drying a slurry of an oil-in-water emulsion and the carrier. The oil phase of the composition is thus the oil derived from the oil in the oil-in-water emulsion.

It is preferred that the composition of the invention is free-flowing so as to be capable of being processed in industrial equipment, for example that used in the foodstuff industry.

The oil-in-water emulsion used to prepare a composition of the invention comprises a non-polar lipid and a lipidic emulsifier. Suitable oil-in-water emulsions including non-polar lipids and lipidic emulsifiers for use in preparing a composition of the invention are disclosed in US patents nos. 6,517,883 (Herslöf *et al.*), 6,355,693 (Herslöf *et al.*) and 5,688,528 (Carlsson *et al.*).

According to an advantageous aspect of the invention the oil-in-water emulsion may optionally comprise additional components known in the art for improving different aspects of the composition, such as one or more of a flavouring agent, a sweetener, a colorant, a thickening agent, a preservative, an antioxidants and/or a dietary supplement.

The non-polar lipid of the invention is preferably a triglyceride, which is solid, semisolid, or liquid at room temperature, selected from natural, semi-synthetic and synthetic oil.

Natural oils are preferably based on the combination of mainly, that is, to more than 90% by weight, preferably to more than 95% by weight, palmitic, oleic, linoleic, linolenic, and stearic esters of glycerol are preferred. Most preferred is palm oil and its equivalent confectionary fats, such as coconut oil, palm kernel oil, cocoa butter; partially hydrogenated soybean oil; partly hydrogenated rapeseed oil/ sunflower oil and its equivalent liquid vegetable oils, such as soybean oil, rapeseed oil, safflower oil, olive oil, corn oil, groundnut oil, linseed oil, rice bran oil, and sesame oil; animal fats and oils, such as fish oil, butter fat, lard, tallow, their fractions and mixtures (such as interesterified mixtures) thereof. The weight ratio of non-polar lipid to emulsifier is preferably from 6:1 to 60:1, more preferred from 10:1 to 30:1.

The lipidic emulsifier of the invention can be of natural or synthetic, including semisynthetic, origin. Particularly preferred are emulsifiers selected from mono- and diglycerides, in particular of lauric, myristic, palmitic, stearic, oleic, linoleic, and linolenic acid, their mixtures and acid esters, in particular their acetates; sorbitan esters and polysorbates; polyglycerol esters; sucrose esters; propylene glycol mono fatty acid esters; esters of lactic acid, succinic acid, fruit acid; lecithins; specific membrane lipids, such as phospholipids, galactolipids, sphingolipids; and hydrophobically-modified starch.

The emulsifier of the invention is preferably selected from phospholipid containing material, such as soy lecithin or a galactolipid containing material, such as fractionated oat oil, of which galactolipid material is most preferred. A preferred galactolipid material comprises 20% by weight to 30% by weight of galactolipids, mainly digalactosyldiacylglycerol, and from 10% by weight to 15% by weight of other polar lipids.

The carrier suitable for use in the preparation of a composition of the invention is one which substantially does not dissolve in the oil-in-water emulsion or otherwise be substantially affected by it. This is of course a condition for an oil-in-water emulsion to be released from a composition of the invention when contacted with an aqueous medium.

Preferably, the carrier may be capable of passing through at least the upper part of the gastro-intestinal tract substantially unchanged. The carrier of the invention may be substantially insoluble in water but may swell in contact with water. Preferably, however, the carrier of the invention is partially or fully soluble in water. Before being added to the oil-in-water emulsion the carrier may be liquid or solid.

Preferred carriers include maltodextrin or a glucose syrup or mono-, di- or oligosaccharides.

Accordingly, a carrier may comprise one or more of the materials specified above. A carrier may comprise at least about 50% by weight, for example at least about 60% by weight, such as at least about 70% by weight, such as at least about 80% by weight, such as at least about 90% by weight, such as at least about 95% by weight or may consist essentially of a material mentioned above or a combination of two or more thereof.

Maltodextrin formally is a starch hydrolysis product which contains fewer than 20 dextrose (glucose) units linked together. Glucose syrup formally is any starch hydrolysate of mono-, di-, and higher saccharides and can be made from starch from any source, of which corn/maize, wheat, rice and potatoes are the most common sources. Accordingly, the terms "maltodextrin" and "glucose syrup" both stand for a family of products, not a single distinct ingredient. Herein the two terms "maltodextrin" and "glucose syrup" may be used synonymously to indicate a starch hydrolysate of mono, di, and higher saccharides. That is to say, "maltodextrin" herein may cover a starch hydrolysis product with a DE of 20 or higher.

As mentioned, it is also within the scope of the invention to use a mixture of carrier material, for example a mixture of two or three or more of the carrier materials described above.

In order to prepare a composition of the invention, an oil-in-water emulsion is mixed with the solid or liquid non-lipid carrier (both the oil-in-water emulsion and non-lipid carrier are as described above). The resulting mixture is then spray-dried to achieve a composition according to the invention.

The oil-in-water emulsion is typically reformulated prior to drying. This process may typically comprise adding the oil-in-water emulsion to water and then adding the carrier. That is to say, the carrier may be added to the oil-in-water emulsion which, optionally, may previously have been diluted to an appropriate concentration. The addition of oil-in-water emulsion to the water and/or the addition of the carrier to the oil-in-water emulsion is/are typically carried out with stirring.

The reformulation process may be carried out at a temperature of from about 40°C to about 70°C, for example from about 50°C to about 60°C, preferably at about 55°C. The reformulated emulsion is typically then maintained at the temperature at which reformulation was carried out, optionally whilst being stirred gently, until use.

The oil-in-water emulsion and carrier are mixed so as to achieve the desired amounts of oil and carrier in the composition of the invention. The mixing is typically performed gently, for example by gradually (for example in separate phases or as a continuous but slow flow) adding the carrier to the oil-in-water emulsion.

Typically, it is preferred for the composition of the invention to comprise from about 0.1% by weight to about 90% by weight of oil-in-water emulsion and from about 10% by weight to about 99.9% by weight of carrier; more preferred from about 5% by weight to about 60% by weight of oil-in-water emulsion and from about 40% by weight to about 95% by weight of carrier; even more preferred from about 5% by weight to about 40% by weight of oil-in-water emulsion and from about 60% to about 95% carrier, most preferably from about 30% by weight to about 40% by weight of oil-in-water emulsion and from about 60% by weight to about 70% by weight of carrier.

The composition may comprise from about 0% by weight to about 5% by weight of water.

The oil-in-water and carrier mixture may be spray-dried using any known method. Typically, however, this process involves atomisation (creation of droplets) of the oil-in-water emulsion, drying the droplets in a stream of hot, dry air and separating the resulting powder from moist air. The powder may then be cooled and, optionally, mixed with additional components and/or packaged.

In more detail, the liquid oil-in-water emulsion/carrier mixture is pumped to the atomizing device where it is broken up into small droplets. These droplets typically then meet a stream of hot air and they lose their moisture while still suspended in the drying air. The dry powder may then be separated from the moist air, for example in cyclones by centrifugal action.

The oil-in-water emulsion/carrier mixture may typically be fed to the atomization means at the temperature at which the mixture was reformulated, i.e. at a temperature of from about 40°C to about 70°C, for example from about 50°C to about 60°C, preferably about 55°C.

Atomization can be performed using any suitable means, for example a spinning disc (or centrifugal atomizer), high pressure atomization, dual fluid atomization, bifluid atomization or ultrasonic atomization.

The pressure used to achieve atomization, where a high pressure or dual- or bi- fluid atomization means is used, is selected so as to achieve the desired droplet size. However, in the context of this invention, a pressure of from about 50 Bar to about 500 Bar is desirable, such as from about 50 Bar to about 200 Bar, for example from about 70 Bar to about 100 Bar, such as from about 80 to about 90 Bar may conveniently be used to achieve a composition of the invention.

The emulsion may optionally be subjected to homogenisation prior to drying. Such homogenisation may conveniently be carried out at a pressure of from about 50 Bar to about 800 Bar, for example from about 80 Bar to about 600 Bar. Preferably, said homogenisation is carried out between 150-250 Bar. Drying may be achieved using, for example, a co-current flow system, a counter-current flow system or a mixture of these systems. Air is typically used as the drying medium gas, although an inerting gas may be used such as nitrogen.

Separation may be achieved using any suitable means such as a cyclonic process, mesh filtration, a liquid scrubber or electro-static precipitation. In cyclones, the dense powder particles are forced toward the cyclone walls while the lighter, moist air is directed away through exhaust pipes. The powder settles to the bottom of the cyclone where it may be removed through a discharging device.

The method of the invention may comprise the additional step of separating a fraction of defined particle size from the resulting particulate composition by, for instance, sieving.

The spray-drying process may be carried out as a multi-stage drying process (fines are recycled to the spray) or as a single effect drying process (no fines are recycled to the spray and the dried product is collected directly to the cyclones). Preferably, a single effect drying process is used.

The spray-drying process described above allows the preparation of an edible spray-dried particulate composition. Accordingly, the invention relates to an edible spray-dried particulate composition obtained or obtainable by the method described herein.

If necessary, the flowability of the composition may be improved by the addition of an anti-caking agent. Any suitable food grade anti-caking agent may be used. Specific anti-caking agents suitable for use in the invention include calcium phosphate, sodium bicarbonate, sodium ferrocyanide, potassium ferrocyanide, calcium ferrocyanide, bone phosphate, sodium silicate, silicon dioxide, calcium silicate, magnesium trisilicate, talcum powder, sodium aluminosilicate, potassium aluminium silicate, calcium aluminosilicate, bentonite, aluminium silicate, stearic acid and polydimethylsiloxane. A combination of two or more such agents may be used.

A composition of the invention or a composition obtained or obtainable according to the method of the invention (both referred to herein as a/the "composition of the invention") are such that the oil phase is capable of being released from the carrier on contact with an aqueous medium to form an oil-in-water emulsion.

The term aqueous medium as used herein is intended to cover, although not necessarily be limited to, water, aqueous solutions of salts such as sodium chloride and/or of organic compounds such as glucose and/or fructose but also aqueous suspensions and/or emulsions of organic material, such as skimmed milk and even saliva or gastric fluids.

It is preferred for the composition of the invention to release more than about 50% by weight, more preferably more than about 75%, for example more than about 95% by weight of the oil phase or substantially all of the oil phase on contact with an aqueous medium, for example at a temperature of at below about 75°C, more preferably of below about 50°C, more preferably of below about 40°C such as at about ambient temperature (such as from about 18°C to about 23°C) or in-mouth conditions.

The composition of the invention may be such that the oil droplets in an oil-in-water emulsion reconstituted when the composition is contacted with an aqueous medium have a D[4,3] of from 100nm to 1000nm, such as from about 200nm to about 700nm, preferably from about 300nm to about 600nm.

Alternatively, or in addition, at least 75%, at least about 85% or at least about 90% of the oil droplets in said oil-in-water emulsion have a size of less than 1 µm. Any combination of the above percentages and particle sizes may be used to define oil droplets released from a composition of the invention.

Thus, at least 75% of the oil droplets may have a size of less than 1 µm, at least about 85% of the oil droplets may have a size of less than about 10 µm, at least about 85% of the oil droplets may have a size of less than about 5µm, at least about 85% of the oil droplets may have a size of less than about 1 µm, at least about 90% of the oil droplets may have a size of less than about 10µm, at least about 90% of the oil droplets may have a size of less than about 5µm or at least about 90% of the oil droplets may have a size of less than about 1 µm.

According to the invention, the d90 by volume of the oil droplets in the emulsion formed by contact of the composition of the invention with an aqueous medium is greater than that of the emulsion used for preparing the composition of the invention by less than about 30%, preferably by less than about 15%, most preferably by less than about 10%.

[D4,3], size and d90 are all parameters well known to those skilled in the art and may be determined using well known methods. Such parameters may, for example, be determined using forward light scattering.

The composition of the invention can be used as such as a food product or food supplement or in the manufacture of a food product (or foodstuff) or food supplement. Accordingly, the invention relates to a non therapeutic use of a food product or food supplement which comprises or consists essentially of a composition of the invention (or comprises an emulsion arising from redispersion of a composition of the invention)for inducing satiety. A food supplement, in the context of this invention, is a preparation for consumption by a human or animal, but which is not in itself represented for use as a conventional food or as the sole item of a meal or diet.

A method for the preparation of a food product or food supplement comprises incorporating a composition of the invention into a food product or food supplement during its preparation. The composition of the invention may be mixed with one or more food ingredients and/or supplements to prepare a food product or food supplement. The resulting food product or food supplement may comprise a composition of the invention or may comprise an emulsion arising from redispersion of a composition of the invention.

A food product or food supplement may be in any suitable form. Thus, the food product or food supplement may be in solid form, such as a pill, a capsule, a tablet, a powder or as a final food product intended for consumption as is. A food product or food supplement may also be in a semi-liquid form or in a liquid form.

The food product or food supplement may be one which is intended for consumption as is or may be one which is intended for mixing with an aqueous medium prior to use. Such an aqueous medium may be water, milk (such as full-fat, half-fat or skimmed milk), a yoghurt, a beverage (such as a soft drink, for example a fruit juice), a soy drink, a rice drink, a vegetable-based drink, a shake, coffee or tea.

A food product or food supplement may be any food product or supplement in which a composition of the invention may be provided or any food product or supplement where the composition was used in its preparation.

A food product or food supplement may therefore be, for example, a dairy product, a processed meat product, a confectionery product, a soup (or instant soup powder), a beverage, a dressing, a sauce, a condiment, a jam, a marmalade, a jelly, a bar (such as a cereal bar or a protein bar), a cereal product such as a breakfast cereal, a baked product. A food product or food supplement may be a powder for use in the preparation of such a food product or food supplement.

A dairy product may be a yoghurt or other liquid or semi-liquid dairy product produced by fermentation of dairy milk with lactic acid producing bacteria or a product comprising a substantial portion of such fermented dairy product, such as at least about 30% or at least about 50% by weight or more. A dairy product may also be a spread, a cream, a yoghurt-based drink, a milk-based drink, a fermented dairy drinks, a fresh cheese, a cottage cheese or an ice-cream.

A confectionery product may be, for example, a chocolate, a candy, for example a candy bar, or a filling for another food product. A dressing according to the invention may be, for example, an oil- and/or vinegar-based salad dressing or a yoghurt-based dressing.

A beverage may be, for example, a soft drink, such as fruit- or vegetable- based drink, a soy drink, a rice drink, coffee, tea or a beverage mixer. A composition of the invention may be present in an ingredient, such as a powder which is then intended for use in the preparation of a beverage, for example one of those beverages mentioned herein.

A composition of the invention may be present in a binder, cream or filling, for example one used with a baked product, such as a pastry, a cookie or a cake and cakes.

A foodstuff or food supplement may be a meal replacement product. Such a product may be in the form of a powder (which may then be mixed with an aqueous medium), for example a soup or shake powder, in the form of a liquid or in the form of a solid bar. Such products are generally intended for consumption by an individual in place of one, two or more regular daily meals. Such meal replacement products may contain typically from about 100 to about 400 kcalories, for example from about 150 to about 250kcal. They may contain at least about 25% protein and at least about 3 vitamins and minerals. Such products may contain at least 2g or more preferred at least 5 g fiber per serving.

The invention also relates to an oil-in-water emulsion obtained by contacting a composition of the invention with an aqueous medium. Such an oil-in-water emulsion may be prepared by contacting a composition of the invention with an aqueous medium. Such a method may, optionally, be accompanied by homogenisation.

The invention further provides a non-therapeutic method for inducing satiety comprising incorporating a composition of the invention into a food product or food supplement during its preparation and providing said food product or food supplement to a person in need of said induced satiety.
The following non-limiting Examples illustrate the invention:

### EXAMPLES

### Example 1

### Fabuless™ emulsion

Preparation of a 42.5 wt% emulsion with fractionated palm oil (batch size 300g).

| Ingredients | wt % |
|---|---|
| Water | 57.5 |
| Fractionated palm oil | 40.0 |
| Fractionated oat oil | 2.5 |

The palm oil is melted at 50°C and mixed with the fractionated oat oil. The oil phase and the water are preheated to 65-70°C and then the oil phase is added to the water under high-shear mixing at 15,000 rpm for 4 min. The pre-emulsion is then divided into two parts; one part is homogenized at 400 Bar, the other part at 800 Bar, both for 6 cycles at 60°C (Rannie homogenizer, Model Mini-Lab 8.30 H, APV Rannie, Denmark).

Both parts of the preparation result in emulsions with a similar cream-like consistency. The average particle size (D[4,3]) is around 480 nm (Zetasizer 4, Malvern Instruments, UK or comparable instrument from Beckman Coulter; see example 5).

In another experiment, the pre-emulsion mentioned above was homogenized 6 times at 600 Bar

An emulsion prepared as above (herein after called Fabuless™ and marketed by DSM Food Specialties, Delft, Netherlands) can be stored at from 2°C to 8°C until being used. More preferably, the storage is at ambient temperature, up to 25°C.

In a similar manner a 28 wt% emulsion can be made with 26.5% of fractionated palm oil and 2.0% of fractionated oat oil.

### Example 2

### Preparation of an emulsion suitable for drying

In order to prepare 1000 grams of an emulsion suitable for drying with a dry matter of 40% and an oil content after drying of 33% and 67% of the carrier, the following protocol was established:
Heat 314 grams of Fabuless™ to 55±2°C under gentle stirring.
Heat 404 grams of demineralized water to 55±2°C under gentle stirring.
Dilute the Fabuless™ by adding the heated demineralized water.

Under gentle stirring slowly dissolve 282 grams of maltodextrin (DE29, 95% dry matter) into the diluted Fabuless™, maintaining a temperature of 55±2°C.

The emulsion this obtained was stable overnight at 55°C.

### Example 3

### Spray-drying trials carried out on Fabuless™

### Materials and Methods

Fabuless™ was prepared as described in Example 1 (Batch No. KLB07108) and maltodextrin (DE=29) was obtained from Syral SAS, Marckolsheim - France (Ref : GD2910QJ). Fabuless™ was reformulated for drying according to the protocol set out in Example 2. Spray-drying trials were then carried out on a pilot scale Multi Stage Drying (MSD) tower.

### Results

Two preparations of Fabuless™ 800 kg were made (one for each day of trials) following the protocol described above in Example 2. Each preparation was sampled for dry matter and oil droplets size determination (Malvern Mastersizer 2000).

Both preparations showed the same results:
- dry matter = 26 ± 1%
- oil droplet size : from 100nm to IOOOnm with a D[4,3] = 400 nm

Dry matter was slightly lower than expected and may be explained by the accuracy of weight / volume measurements. The re-formulated emulsions did not show any difference in oil droplet size with Fabuless™. These emulsions remained stable for at least 2 weeks at room temperature.

The drying parameters used in the trials are set out in Table 1 below and the results of the trials are set out in Table 2. These are the drying parameters for trial 3. The tower was used as a single effect tower (no fines recycling to the tower). The dry Fabuless™ is directly collected to the cyclones (external vibrating fluidised bed is not used)

**Table 1. Fabuless™ drying parameters**

| **pilot-scale MSD tower** | |
|---|---|
| inlet air temperature (°C) | 170 ± 3 |
| outlet air temperature (°C) | 69 ± 1 |
| static bed air temperature (°C) | 23 ± 3 |
| feed rate (kg/h) | 90 ± 5 |
| atomization pressure (bar) | 85 ± 5 \| 6 ± 0.5 |
| nozzle type | high pressure (bifluid) |
| emulsion temperature (°C) | 55 ± 5 |

**Table 2: description and results of Fabuless drying trials**

| **trial no.** | **homogenization @ 500 bar** | **drying method** | **nozzle type** | **atomization, pressure** | **powder d50** | **volume fraction > 1 µm after redispersion** |
|---|---|---|---|---|---|---|
| 1 | No | MSD | hlqh pressure | 85 bar | 500 µm | 13 |
| 2 | No | SED | high pressure | 85 bar | 570 µm | 23 |
| 3 | yes | SED | high pressure | 85 bar | 75 µm | 8 |
| 4 | yes | SED | bifluid | 6 bar | 66 µm | 15 |
| 5 | No | SED | bifluid | 6 bar | 95 µm | 20 |

At an atomisation pressure of 85 Bar (see Table 2, trial no. 1), no product stuck to the walls and the percentage of oil droplets above 1 µm was only 13%. Thus, it seems a relatively low atomisation pressure allowed good drying to be achieved.

The MSD tower was also used as a Simple Effect Dying (SED) tower (no fines recycling to the spray and dried product collected directly to the cyclones). In this process, the PSD of the dried product remained unchanged (see Table 2, trial no. 2). This could be explained by the longer time needed by large droplets to dry and by the turbulences in the tower due to exhaust air locations (top of the tower). The chance of contact between particles (wet and dry) in the tower is high and agglomeration also occured. The PSD in SED is wider than in MSD because fines remain in the end product. A further improvement seen with the SED was a quicker re-dispersibility of the dry Fabuless.

In view of the above-mentioned reasons, the SED process was retained to check the effect of homogenisation of the emulsion before drying.

In Table 2, trial no. 3, it can be seen that the homogenisation allows a decrease in oil droplet size in the re-dispersed emulsion and also improves the re-dispersibility of the dry Fabuless.

In Table 2, trial nos. 4 and 5, the atomisation was performed by a bi-fluid nozzle with and without homogenisation of the re-formulated Fabuless™. A positive effect (i.e. lower d50) of homogenisation on oil droplet size in the re-dispersed dried product was observed. However, the bi-fluid nozzle gave a higher percentage of droplets above 1 µm (15 to 20 %) than the high pressure nozzle (10%).

### Conclusion

It can be seen that maltodextrin with a DE of 29 may be used as a carrier for drying the Fabuless™ oil-in-water emulsion. The Fabuless™ emulsion reformulated for drying was stable (with respect to oil droplet size) for at least two weeks at room temperature. Homogenisation (500 Bar) had a positive effect on oil droplet size in the re-dispersed dry Fabuless™ emulsion and also improved re-dispersion speed. Homogenisation of the reformulated emulsion prior to drying, SED and a low atomisation pressure (HP nozzle at 85 Bar) achieved the best results.

### Example 4

### Further spray-drying trials carried out on Fabuless™

A further spray-drying trial was carried out with the Fabuless™ emulsion as described in Example 4 except that the carrier was glucose syrup (DE33) and a pilot scale Filtermat dryer was used.

### Results

A preparation of Fabuless™ was made following the protocol described above in Example 2. The preparation was sampled for dry matter and oil droplets size determination (Malvern mastersizer 2000).

The preparation showed the following results:
- dry matter = 50%
- oil droplet size : from 250 to 750 nm with a D[4,3] = 450 nm

The re-formulated emulsions did not show any difference in oil droplet size with Fabuless™. These emulsions remained stable for at least 2 weeks.

The drying trials were carried out with a inlet air temperature 180°C, an outlet air temperature of 73 to 79°C, an atomization pressure of 85 ± 5 Bar and an emulsion temperature of 55 to 56°C. The re-formulated emulsion was homogenised using 150 Bar prior to spray-drying. The volume fraction > 1 µm after redispersion was 8%.

### Conclusion

It can be seen that glucose syrup with a DE=33 may be used as a carrier for drying the Fabuless™ oil-in-water emulsion.

### Example 5

### Fabuless™ dry formulation: evaluation of particle size distribution of pilot plant samples

The efficacy of the Fabuless™ emulsion as an inducer of satiety is supported by a number of clinical studies. In order to be able to use the available efficacy studies to support similar nutritional claims in relation to the dry product, the particle size distribution after redispersion of the powder in an aqueous medium should resemble the original emulsion particle size as closely as possible.

Accordingly, the particle size of dry Fabuless powder from trial no. 3 as described above in Example 3 was examined in more detail.

The result of the trial at the optimum conditions was a white, free-flowing powder with a size of the powder particles ranging from 100 to 300 µm and a fat content of approximately 33%. The powder could easily be redispersed in cold water. The emulsion obtained by redispersion of 10 wt% of powder in cold water was centrifuged at 5000rpm for 20 minutes. No separation of the emulsion was observed.

The particle size of the original emulsion and the redispersed powder were compared using a Beckman Coulter LS13320 forward laser light scattering device. The size distribution results are shown in Figure 1.

It can be seen that the spray-drying of the material results in an increase of the particle size, most probably caused by agglomeration of the oil droplets. The average particle size (D[4,3]) has increased from 0.398 to 0.555 µm. However, the volume fraction of particles below 1.047 µm is 91.7%.

To be able to use the available efficacy data from the Fabuless™ oil-in-water emulsion, it is preferable to show homology between the redispersed dispersion from the dry powder and the original emulsion.

Assuming that particles below 1 µm are all efficacious, it can be shown that the dry powder, after dispersion in an aqueous medium, has more than 90% homology with the original emulsion.

## Claims

1. A method for obtaining a spray-dried oil-in-water emulsion which after redispersion in an aqueous medium has at least 75% by volume of the redispersed oil droplets in a particle size which is smaller or equal to the maximum particle size of the original oil-in-water emulsion and wherein at least 95% of the particles of the oil-in-water emulsion before spray drying has a particle size of < 1µm, said method comprising the steps of providing an oil-in-water emulsion, adding a non-lipid carrier to said oil-in-water emulsion and obtaining an oil-in-water/carrier mixture, homogenizing the obtained oil-in-water/carrier mixture and spray drying the obtained homogenized oil-in-water/carrier mixture, wherein the non-lipid carrier comprises a starch hydrolysate of mono, di, and higher saccharides.

2. A method according to claim 1, wherein the oil-in-water emulsion used for mixing with a carrier was prepared by homogenizing an oil and water mixture at least 3 times at 500-1200 Bar.

3. An edible spray-dried particulate composition comprising a particulate solid non-lipid carrier and an oil phase, wherein
(i) said oil phase being capable of being released from the carrier on contact with an aqueous medium to form an oil-in-water emulsion; and
(ii) the oil droplets in said oil-in-water emulsion have a D[4,3] of from 100nm to 1000nm; or
at least 75% of the oil droplets in said oil-in-water emulsion have a size of less than 1µm,
wherein the non-lipid carrier comprises a starch hydrolysate of mono, di, and higher saccharides and the composition is obtainable according to the method of claim 1 or 2.

4. A composition according to claim 3, wherein the oil droplets in the oil-in-water emulsion have a D[4,3] of from 200nm to 700nm.

5. A composition according to claim 3 or 4, wherein the oil phase comprises a non-polar lipid and a lipidic emulsifier and wherein the lipidic emulsifier comprises galactolipid material.

6. A composition according to any one of claims 3 to 5 which comprises:
from 5% by weight to 60% by weight of the oil phase;
from 40% by weight to 95% by weight of the carrier; and
from 0% by weight to 5% by weight of water.

7. A composition according to claim 5, wherein the non-polar lipid is a natural oil of which more than 90% by weight is comprised of one or more of a palmitic, an oleic, a linoleic, a linolenic or a stearic ester of glycerol.

8. A composition according to claim 7, wherein the oil is selected from: palm oil or one of its equivalent confectionary fats, such as coconut oil, palm kernel oil or cocoa butter; partially hydrogenated soybean oil; partly hydrogenated rapeseed oil; sunflower oil or one of its equivalent liquid vegetable oils, such as soybean oil, rapeseed oil, safflower oil, olive oil, corn oil, groundnut oil, linseed oil, rice bran oil, evening primrose oil, borage oil or sesame oil; or an animal fat or oil, such as fish oil, butter fat, lard, tallow or a fraction or mixture of two or more of any thereof, such as an interesterified mixture.

9. A composition according to any one of claims 5 to 8, wherein the lipidic emulsifier comprises a galactolipid material, wherein the galactolipid material comprises 20% by weight to 30% by weight of galactolipids, mainly digalactosyldiacylglycerol, and from 10% weight to 15% by weight of other polar lipids.

10. A method for the preparation of an edible spray-dried particulate composition according to claims 3 to 9, which method comprises:
(a) providing an oil-in-water emulsion;
(b) providing a solid or liquid non-lipid carrier;
(c) adding the carrier to the oil-in-water emulsion; and
(d) spray-drying the resulting mixture,
thereby to prepare an edible spray-dried particulate composition, wherein the non-lipid carrier comprises a starch hydrolysate of mono, di, and higher saccharides.

11. A method according to claim 10, wherein the oil-in-water emulsion comprises a non-polar lipid and a lipidic emulsifier, and wherein the lipidic emulsifier comprises galactolipid material.

12. A method according to any one of claims 10 or 11, wherein the oil-in-water emulsion and the solid or liquid non-lipid carrier are provided in amounts such that the resulting edible spray-dried particulate composition comprises:
from 5% by weight to 60% by weight of the oil phase;
from 40% by weight to 95% by weight of the carrier; and
from 0% by weight to 5% by weight of water.

13. A method for the preparation of an edible oil-in-water emulsion which method comprises contacting a composition according to any one of claims 3 to 9 with an aqueous medium.

14. Non-therapeutic use of a food product or food supplement prepared using a composition according to any one of claims 3 to 9 for inducing satiety.

## Patentansprüche

1. Verfahren zum Erhalt einer sprühgetrockneten Öl-in-Wasser-Emulsion, bei der nach erneuter Dispersion in einem wässerigen Medium mindestens 75 Vol.-% der erneut dispergierten Öltropfen eine Teilchengröße kleiner oder gleich der maximalen Teilchengröße der ursprünglichen Öl-in-Wasser-Emulsion haben und wobei mindestens 95 % der Teilchen der Öl-in-Wasser-Emulsion vor der Sprühtrocknung eine Teilchengröße von < 1 µm haben, wobei das Verfahren die Schritte der Bereitstellung einer Öl-in-Wasser-Emulsion, der Zugabe eines Nichtlipid-Trägers zu der Öl-in-Wasser-Emulsion und des Erhalts eines Öl-in-Wasser/TrägerGemisches, des Homogenisierens des erhaltenen Öl-in-Wasser/Träger-Gemisches und der Sprühtrocknung des erhaltenen homogenisierten Öl-in-Wasser/Träger-Gemisches umfasst, wobei der Nichtlipid-Träger ein Stärkehydrolysat aus Mono-, Di- und höheren Sacchariden umfasst.

2. Verfahren nach Anspruch 1, wobei die Öl-in-Wasser-Emulsion, die zum Mischen mit einem Träger verwendet wird, durch mindestens 3-maliges Homogenisieren eines Gemisches aus Öl und Wasser bei 500 - 1.200 bar hergestellt wurde.

3. Essbare sprühgetrocknete partikuläre Zusammensetzung, umfassend einen partikulären, festen, Nichtlipid-Träger und eine Ölphase, wobei
(i) die Ölphase beim Kontakt mit einem wässerigen Medium zur Bildung einer Öl-in-Wasser-Emulsion aus dem Träger freigesetzt werden kann; und
(ii) die Öltropfen in der Öl-in-Wasser-Emulsion einen D[4,3] von 100 nm bis 1.000 nm haben; oder
mindestens 75 % der Öltropfen in der Öl-in-Wasser-Emulsion eine Größe von weniger als 1 µm haben,
wobei der Nichtlipid-Träger ein Stärkehydrolysat aus Mono-, Di- und höheren Sacchariden umfasst und die Zusammensetzung nach dem Verfahren von Anspruch 1 oder 2 erhältlich ist.

4. Zusammensetzung nach Anspruch 3, wobei die Öltropfen in der Öl-in-Wasser-Emulsion einen D[4,3] von 200 nm bis 700 nm haben.

5. Zusammensetzung nach Anspruch 3 oder 4, wobei die Ölphase ein nicht-polares Lipid und einen lipidischen Emulgator umfasst, und wobei der lipidische Emulgator Galactolipidmaterial umfasst.

6. Zusammensetzung nach einem der Ansprüche 3 bis 5, umfassend:
5 Gew.-% bis 60 Gew.-% der Ölphase;
40 Gew.-% bis 95 Gew.-% des Trägers und
0 Gew.-% bis 5 Gew.-% Wasser.

7. Zusammensetzung nach Anspruch 5, wobei das nicht-polare Lipid ein natürliches Öl ist, von dem mehr als 90 Gew.-% aus einem oder mehreren von einem Palmitin-, einem Öl-, einem Linol-, einem Linolen- oder einem Stearinsäureester von Glycerol bestehen.

8. Zusammensetzung nach Anspruch 7, wobei das Öl ausgewählt ist aus: Palmöl oder einem seiner äquivalenten Süßwarenfette, wie Kokosnussöl, Palmkernöl oder Kakaobutter; teilweise hydriertem Sojabohnenöl; teilweise hydriertem Rapsöl; Sonnenblumenöl oder einem seiner äquivalenten flüssigen Pflanzenöle, wie Sojabohnenöl, Rapsöl, Safloröl, Olivenöl, Maiskeimöl, Erdnussöl, Leinöl, Reisschalenöl, Nachtkerzenöl, Borretschöl oder Sesamöl; oder einem tierischen Fett oder Öl wie Fischöl, Butterfett, Schweineschmalz, Talg oder einer Fraktion oder einem Gemisch aus zwei oder mehr davon, wie einem umgeesterten Gemisch.

9. Zusammensetzung nach einem der Ansprüche 5 bis 8, wobei der lipidische Emulgator ein Galactolipidmaterial umfasst, wobei das Galactolipidmaterial 20 Gew.-% bis 30 Gew.-% Galactolipide, hauptsächlich Digalactosyldiacylglycerol, und 10 Gew.-% bis 15 Gew.-% anderer polarer Lipide umfasst.

10. Verfahren zur Herstellung einer essbaren sprühgetrockneten partikulären Zusammensetzung nach den Ansprüchen 3 bis 9, wobei das Verfahren umfasst:
(a) Bereitstellen einer Öl-in-Wasser-Emulsion;
(b) Bereitstellen eines festen oder flüssigen Nichtlipid-Trägers;
(c) Zugeben des Trägers zu der Öl-in-Wasser-Emulsion und
(d) Sprühtrocknen des resultierenden Gemisches,
wodurch eine essbare sprühgetrocknete partikuläre Zusammensetzung hergestellt wird, wobei der Nichtlipid-Träger ein Stärkehydrolysat aus Mono-, Di- und höheren Sacchariden umfasst.

11. Verfahren nach Anspruch 10, wobei die Öl-in-Wasser-Emulsion ein nicht-polares Lipid und einen lipidischen Emulgator umfasst, und wobei der lipidische Emulgator Galactolipidmaterial umfasst.

12. Verfahren nach einem der Ansprüche 10 oder 11, wobei die Öl-in-Wasser-Emulsion und der feste oder flüssige Nichtlipid-Träger in derartigen Mengen bereitgestellt werden, dass die resultierende essbare sprühgetrocknete partikuläre Zusammensetzung:
5 Gew.-% bis 60 Gew.-% der Ölphase;
40 Gew.-% bis 95 Gew.-% des Trägers und
0 Gew.-% bis 5 Gew.-% Wasser umfasst.

13. Verfahren zur Herstellung einer essbaren Öl-in-Wasser-Emulsion, wobei das Verfahren das Kontaktieren einer Zusammensetzung nach einem der Ansprüche 3 bis 9 mit einem wässerigen Medium umfasst.

14. Nicht-therapeutische Verwendung eines Nahrungsmittelproduktes oder Nahrungsergänzungsmittels, hergestellt unter Verwendung einer Zusammensetzung nach einem der Ansprüche 3 bis 9, zum Herbeiführen einer Sättigung.

## Revendications

1. Procédé pour obtenir une émulsion d'huile dans l'eau séchée par atomisation qui, après une redispersion dans un milieu aqueux, présente au moins 75 % en volume des gouttelettes d'huile redispersées affichant une taille de particule inférieure ou égale à la taille de particule maximum de l'émulsion d'huile dans l'eau originale et dans lequel au moins 95 % des particules de l'émulsion d'huile dans l'eau avant le séchage par atomisation présentent une taille de particule inférieure à 1 *µ*m, ledit procédé comprenant les étapes consistant à fournir une émulsion d'huile dans l'eau, à ajouter un porteur non lipidique à ladite émulsion d'huile dans l'eau et à obtenir un mélange d'huile dans l'eau et de porteur, à homogénéiser le mélange d'huile dans l'eau et de porteur obtenu et à sécher par atomisation le mélange d'huile dans l'eau et de porteur homogénéisé obtenu, dans lequel le porteur non lipidique comprend un hydrolysat d'amidon de monosaccharides, de disaccharides et plus.

2. Procédé selon la revendication 1, dans lequel l'émulsion d'huile dans l'eau utilisée pour être mélangée avec un porteur a été préparée en homogénéisant un mélange d'huile et d'eau au moins trois fois à 500-1200 bars.

3. Composition particulaire séchée par atomisation comestible comprenant un porteur non lipidique solide particulaire et une phase huileuse, dans laquelle:
(i) ladite phase huileuse peut être séparée du porteur lors d'un contact avec un milieu aqueux afin de former une émulsion d'huile dans l'eau; et
(ii) les gouttelettes d'huile dans ladite émulsion d'huile dans l'eau présentent un D[4,3] compris entre 100 nm et 1 000 nm; et
au moins 75 % des gouttelettes dans ladite émulsion d'huile dans l'eau présentent une taille inférieure à 1 *µ*m;
dans laquelle le porteur non lipidique comprend un hydrolysat d'amidon de monosaccharides, de disaccharides et plus et la composition peut être obtenue suivant le procédé selon la revendication 1 ou 2.

4. Composition selon la revendication 3, dans laquelle les gouttelettes d'huile dans l'émulsion d'huile dans l'eau présentent un D[4,3] compris entre 200 nm et 700 nm.

5. Composition selon la revendication 3 ou 4, dans laquelle la phase huileuse comprend un lipide non polaire et un émulsifiant lipidique et dans lequel l'émulsifiant lipidique comprend une matière galactolipidique.

6. Composition selon l'une quelconque des revendications 3 à 5, contenant:
de 5 % en poids à 60 % en poids de la phase huileuse;
de 40 % en poids à 95 % en poids du porteur; et
de 0 % en poids à 5 % en poids d'eau.

7. Composition selon la revendication 5, dans laquelle le lipide non polaire est une huile naturelle dont plus de 90 % en poids sont constitués d'un ou de plusieurs parmi un ester palmitique, oléique, linoléique, linolénique ou stéarique de glycérol.

8. Composition selon la revendication 7, dans laquelle l'huile est sélectionnée parmi l'huile de palme ou une de ses graisses de confiserie équivalente, telles que l'huile de coco, l'huile de palmiste ou le beurre de cacao; l'huile de soja partiellement hydrogénée; l'huile de colza partiellement hydrogénée; l'huile de tournesol ou une de ses huiles végétales liquides équivalentes, telles que l'huile de soja, l'huile de colza, l'huile de carthame, l'huile d'olive, l'huile de maïs, l'huile d'arachide, l'huile de lin, l'huile de son de riz, l'huile d'onagre, l'huile de bourrache ou l'huile de sésame; ou une graisse ou une huile animale, telle que l'huile de poisson, la graisse de beurre, le bacon, le suif ou une fraction ou un mélange de deux ou plus de deux de ceux-ci, tel qu'un mélange interestérifié.

9. Composition selon l'une quelconque des revendications 5 à 8, dans laquelle l'émulsifiant lipidique comprend une matière galactolipidique, dans laquelle la matière galactolipidique contient de 20 % en poids à 30 % en poids de galactolipides, principalement du digalactosyldiacylglycérol et de 10 % en poids à 15 % en poids d'autres lipides polaires.

10. Procédé de préparation d'une composition particulaire séchée par atomisation comestible selon les revendications 3 à 9, ledit procédé comprenant les étapes suivantes:
(a) fournir une émulsion d'huile dans l'eau;
(b) fournir un porteur non lipidique solide ou liquide;
(c) ajouter le porteur à l'émulsion d'huile dans l'eau; et
(d) sécher par atomisation le mélange obtenu,
afin de préparer une composition particulaire séchée par atomisation comestible, dans lequel le porteur non lipidique comprend un hydrolysat d'amidon de monosaccharides, de disaccharides et plus.

11. Procédé selon la revendication 10, dans lequel l'émulsion d'huile dans l'eau comprend un lipide non polaire et un émulsifiant lipidique et dans lequel l'émulsifiant lipidique comprend une matière galactolipidique.

12. Procédé selon l'une quelconque des revendications 10 ou 11, dans lequel l'émulsion d'huile dans l'eau et le porteur non lipidique solide ou liquide sont prévus en des quantités telles que la composition particulaire séchée par atomisation comestible obtenue contienne:
de 5 % en poids à 60 % en poids de la phase huileuse;
de 40 % en poids à 95 % en poids du porteur; et
de 0 % en poids à 5 % en poids d'eau.

13. Procédé de préparation d'une émulsion d'huile dans l'eau comestible, ledit procédé comprenant la mise en contact d'une composition selon l'une quelconque des revendications 3 à 9 avec un milieu aqueux.

14. Usage non thérapeutique d'un produit alimentaire ou d'un complément alimentaire préparé en utilisant une composition selon l'une quelconque des revendications 3 à 9 en vue de générer une satiété.
